# EUROPEAN PATENT APPLICATION

(11) **EP 3 021 263 A1**
(43) Date of publication of application: **18.05.2016**
(21) Application number: 14822103.9
(22) Date of filing: 09.07.2014
(51) Int. Cl.: G06Q 10/00, G06Q 10/06, G06Q 10/10

(54) **EVENT ASSISTANCE DEVICE AND EVENT ASSISTANCE METHOD**

(30) Priority: 12.07.2013 JP 2013146856
(71) Applicant: Mizuho Information & Research Institute, Inc., Tokyo 101-8443 (JP)
(72) Inventor: TOMOEDA, Atsushi, Tokyo 101-8443 (JP); HOSHII, Shohei, Tokyo 101-8443 (JP)
(74) Representative: Daub, Thomas
(86) International application number: PCT/JP2014/068346
(87) International publication number: WO 2015/005395

(57) **Abstract**

An event assistance device is provided with a control section which is connected to a schedule management system and a plurality of service management systems. Each of the service management systems executes a type of process corresponding to an event to be managed. The control section identifies an event to be managed based on an event in schedule information recorded in the schedule management system. In order to cause a type of process corresponding to the event to be managed to be executed, the control section provides notification based on the event to be managed to each of the service management systems.

## Description

### TECHNICAL FIELD

The present invention relates to an event assistance apparatus and an event assistance method for assisting execution of an event.

### BACKGROUND ART

In corporate activities, approval processes are performed based on approval workflows for appropriate administrative control. An application management system disclosed in Patent Document 1 assists routing a draft that requires an approval based on such an approval workflow. The application management system includes department shared folders for departments provided in a file server. Each department folder contains a pending application folder, a routing folder, and a final approval folder. A control section of an application management server manages a workflow using these folders.

A workflow management system disclosed in Patent Document 2 coordinates the workflow process with a schedule. The workflow management system includes a workflow server and a schedule server. The workflow server includes a workflow route table, which contains information about people in charge who are capable of being in charge of the workflow. The schedule server includes a schedule management table, which contains information about schedules of the people in charge. The workflow server selects a person in charge who has a spare time at the earliest date and time among the people in charge stored in the person in charge information from the schedule management table and calculates the shortest workflow route.

### PRIOR ART DOCUMENTS

### Patent Documents

Patent Document 1: Japanese Laid-Open Patent Publication No. 2012-168721 (page 1, Fig. 1)
Patent Document 2: Japanese Laid-Open Patent Publication No. 2011-191964 (page 1, Fig. 1)

### SUMMARY OF THE INVENTION

### Problems that the Invention is to Solve

As described above, corporate activities require an approval process to be performed using an appropriate approval workflow depending on situations. However, the corporate activities include various events, and executing a single event involves various procedures and resources (facilities and information). Thus, it is necessary to apply an appropriate approval workflow depending on procedures and resources.

Furthermore, a corporation has various service management systems. Each service management system manages corresponding type of resources. For example, entry to and exit from facilities or rooms of a corporation are managed by a system for facility management. Information used by a corporation (for example, important information such as confidential information) is managed by a system for information management. Transportation expenses spent by officers/employees to travel for events are managed by a system for reimbursing officers/employees for transportation expenses. Furthermore, taking out corporation assets such as personal computers outside the corporation is managed by an asset management system. As described above, if many service management systems are involved in a single event, and a procedure is carried out in each service management system, a workload is increased. In addition, there is a possibility that an appropriate management will not be performed due to forgetting to carry out any of the procedures.

Furthermore, details or participants of an event may be changed. In this case also, each service management system is desirably changed accurately for control reasons.

Accordingly, it is an objective of the present invention to provide an event assistance system and an event assistance method for efficiently and accurately managing an event. Means for Solving the Problems

In accordance with one aspect, an event assistance apparatus is provided that includes a control section connected to a schedule management system, which stores event schedule information, and a plurality of service management systems. Each service management system executes a type of process corresponding to an event to be managed. The control section is configured to identify an event to be managed based on an event in the schedule information stored in the schedule management system, and provide notification based on the event to be managed to each service management system to execute a type of process corresponding to the event to be managed. With this configuration, based on the schedule information, the event assistance apparatus coordinates with the service management systems to perform various processes for executing the event.

In one embodiment, upon detection of a change in the status of the event to be managed, the control section is configured to notify each service management system of the change in the event to be managed. This configuration allows the system to appropriately respond to the situation change of the event.

In one embodiment, the control section is configured to obtain information on situation change related to the event to be managed from each service management system, and determine the status of the event to be managed based on the situation change information. With this configuration, situation change is obtained from each service management system, and the control section responds in accordance with the change.

In one embodient the control section is configured to identify an event attribute of the event to be managed, and determine whether a notification to each service management system is necessary based on the event attribute. With this configuration, an appropriate notification is provided depending on the event attribute.

In accordance with another aspect, an event assistance apparatus is provided that includes a control section connected to a schedule management system, which stores event schedule information, and a plurality of service management systems. Each service management system executes a type of process corresponding to an event to be managed. The control section further includes an administrative control section, which determines an approved route in accordance with an event attribute. The control section is configured to obtain the approved route from the administrative control section based on the event attribute of the event to be managed additionally registered in the schedule information. With this configuration, an approval workflow for approval of an event is determined based on the event attribute such as the event category.

In one embodiment, he administrative control section further includes a control storage, which stores individual control on a control event that needs to be controlled. The control section is configured to identify the control event that needs to be controlled based on the event attribute, and determine the approved route corresponding to the individual control of the control event in the administrative control section. With this configuration, a necessary approval for control is obtained when an event is executed.

In one embodiment, the event assistance apparatus further includes an authorized person determining section for determining an authorized person for approval. The control section is further configured to determine, in the authorized person determining section, an authorized person for approval corresponding to the event attribute. With this configuration, authorized person for approval is determined.

In one embodiment, the control section is further configured to determine an authorized person for approval based on an attribute of a participant of the event to be managed. With this configuration, an approval workflow corresponding to the attribute of the participant is determined.

In one embodiment, the control storage stores information on an order relation of individual controls. The control section is configured to determine the order relation of the individual controls, which are identified based on the event attribute, and determine an approval route based on the order relation. With this configuration, in a case in which an approval is required through two or more procedures, an integrated and efficient approval workflow is generated.

In one embodiment, the administrative control section maintains approval rules for determining an authorized person for approval. When the control section detects that the authorized person for approval is common among the individual controls identified based on the event attribute, the control section is further configured to integrate, in the approval route, the individual controls having the common authorized person for approval to satisfy the approval rules. With this configuration, authorized people of two or more individual controls are integrated and approval process is efficiently performed.

In one embodiment, the control storage stores individual controls for which the authorized person is responsible in regard to the authorized person for approval in the approval route. With this configuration, a process for approval is appropriately performed referring to the control storage.

In one embodiment, the control section is further configured to confirm whether there is a prior approval for the event to be managed, and respond to the individual control as an approved control if the prior approval is already registered. With this configuration, an approval process is efficiently performed with the prior approval.

In one embodiment, the control section is further configured to request an approval from an authorized person for approval in the approval route and manage the approval state of the authorized person. With this configuration, the approval workflow is executed.

In one embodiment, the control section is further connected to a workflow management system. The control section is further configured to share the approval route and the approval state with the workflow management system. With this configuration, the approval workflow is executed in the workflow management system.

In one embodiment, the control section is configured to determine a recommended participant for the event to be managed, and output an alert when the recommended participant is not registered in the event to be managed. With this configuration, participation of appropriate participants is promoted.

In accordance with another aspect, a method for assisting an event using an event assistance apparatus is provided. The event assistance apparatus includes a control section connected to a schedule management system, which stores event schedule information, and a plurality of service management systems. Each service management system executes a type of process corresponding to an event to be managed. The control section identifies an event to be managed based on an event in the schedule information stored in the schedule management system, and provides notification based on the event to be managed to each service management system to execute a type of process corresponding to the event to be managed.

### BRIEF DESCRIPTION OF THE DRAWINGS

Fig. 1 is an explanatory diagram illustrating an event assistance system according to a present embodiment;
Fig. 2 is an explanatory diagram of data used in the present embodiment, where section (a) shows data stored in a party management system, section (b) shows data stored in a business operation storage, section (c) shows data stored in an event storage, and section (d) shows data stored in a task assignment table storage;
Fig. 3 is an explanatory diagrams of data used in the present embodiment, where section (a) shows data stored in a procedure DB, and section (b) shows a control table;
Fig. 4 is an explanatory diagram illustrating an overview of a process according to the present embodiment;
Fig. 5 is an explanatory diagram illustrating a routine according to the present embodiment;
Fig. 6 is an explanatory diagram illustrating a routine according to the present embodiment;
Fig. 7 is an explanatory diagram illustrating a routine according to the present embodiment;
Fig. 8 is an explanatory diagram illustrating a routine according to the present embodiment;
Fig. 9 is an explanatory diagram illustrating a state transition according to the present embodiment;
Fig. 10 is an explanatory diagram illustrating a control table according to the present embodiment;
Fig. 11 is an explanatory diagram illustrating a control table according to the present embodiment;
Fig. 12 is an explanatory diagram illustrating a control table according to the present embodiment;
Fig. 13 is an explanatory diagram illustrating a control table according to the present embodiment;
Fig. 14 is an explanatory diagram of data used in the present embodiment, where section (a) shows a business operation management record, section (b) shows a task assignment management record, section (c) shows an event, section (d) shows a person-based individual control list, and section (e) shows a task-based approval WF;
Fig. 15 is an explanatory diagrams of data used in the present embodiment, where section (a) shows a person-based approval WF (task → people replaced version), section (b) shows a person-based approval WF (optimized version), and section (c) shows a person-based approval WF (realistic solution version);
Fig. 16 is an explanatory diagram illustrating a routine according to the present embodiment;
Fig. 17 is an explanatory diagram illustrating a routine according to the present embodiment;
Fig. 18 is an explanatory diagram illustrating a routine according to the present embodiment;
Fig. 19 is an explanatory diagram illustrating a routine according to the present embodiment; and
Fig. 20 is an explanatory diagram illustrating a routine according to another embodiment.

### MODES FOR CARRYING OUT THE INVENTION

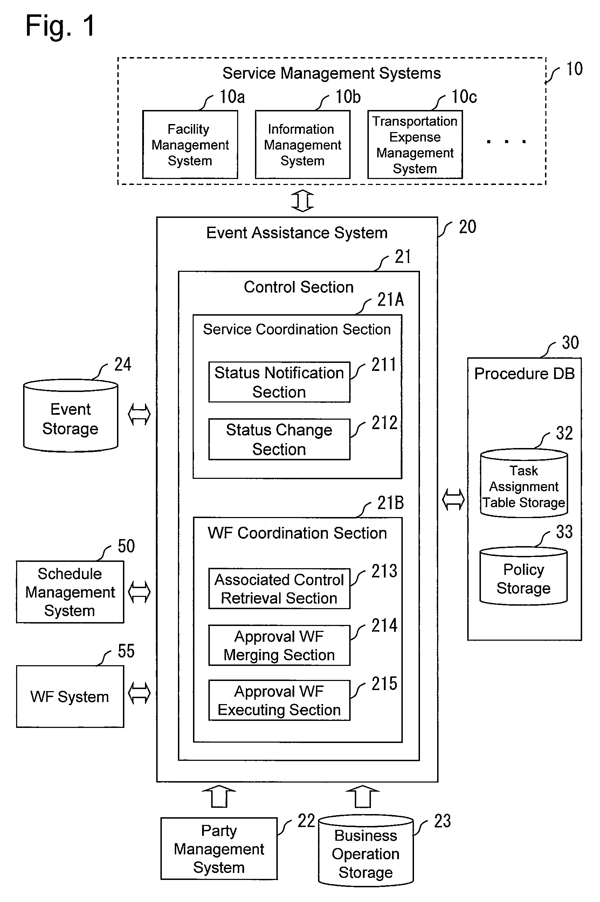

An event assistance apparatus according to one embodiment of the present invention will now be described with reference to Figs. 1 to 19. The present embodiment assumes a case in which officers/employees of a corporation perform processes when registering an event, when permitting execution of the event, when executing the event, and after executing the event. In this case, the present invention assists in executing an approval process and a management process required for carrying out the event.

The present embodiment includes, as shown in Fig. 1, two or more service management systems 10, an event assistance system 20, a party management system 22, a business operation storage 23, an event storage 24, a procedure data base (DB) 30, a schedule management system 50, and a workflow (WF) system 55, which are connected via a network (not shown). In the present embodiment, an event applied via the schedule management system 50 (applied event) is approved through an approval workflow in the WF system 55 and is validated to become an approved event. The event assistance system 20 treats the applied event and the approved event as an event to be managed.

The service management systems 10 are computer systems that manage services for each officer/employee. In the present embodiment, the service management systems 10 include a facility management system 10a, which manages entry to and exit from the building or rooms of the corporation, an information management system 10b, which manages, for example, materials used in meetings, and a transportation expense management system 10c, which manages reimbursement for transportation expenses required in travelling of officers/employees.

The schedule management system 50 is a computer system that manages events applied by officers/employees (applied events) and a to-do list of each officer/employee.

An applied event is stored when a new event is registered. Data on an event code, an event name, an applicant, a date and time, a location, an event category, a business operation, material, and participants are stored as the applied event.

An event code data area stores data on an identifier for identifying the applied event.

An event name data area stores data on the name of the event.

An applicant data area stores data on an identifier (officer/employee code) for identifying the officer/employee who has applied for the applied event.

A date and time data area stores data on the month, day, year, and the time at which the applied event will be carried out, and a location data area stores data on an identifier (location code) for identifying the location where the applied event will be carried out.

An event category data area stores data on the identifier for identifying the category of the applied event.

A business operation data area stores data on the identifier for identifying the business operation to which the applied event belongs.

A material data area stores data on the materials used in the applied event.

A participant data area stores data on identifiers for identifying the participants who will participate in the applied event. The data area stores the officer/employee codes of party information.

Furthermore, the to-do list stores processes that each of the officers/employees has to perform.

The schedule management system 50 is connected to schedulers (schedule management applications) stored in a terminal of each officer/employee.

The officers/employees' terminals are computer terminals used by the officers/employees for application of events, for control involved in approval of events, and for participation in events. The officers/employees' terminals include an indicating section (such as a display) and an input section (such as a keyboard and a pointing device). The present embodiment allows an officer/employee who applies for an event to use the scheduler in the employee's terminal to access the schedule management system 50 and register the application event. Furthermore, managers use the officers/employees' terminals to access the WF system 55 and perform confirmation associated with the applied event.

The WF system 55 is a computer system that performs processes to route various applications to officers/employees' terminals of authorized people involved in the approval based on the approval workflow.

The event assistance system 20 is a computer system that manages coordination with the following systems.

Coordination with the schedule management system 50 through the applied event

Coordination with the WF system 55 through the approval workflow, which plays a role in approval control involved in execution of the applied event

Coordination with the service management systems 10 through the state of the event approved based on the approval workflow (approved event)

The event assistance system 20 includes a control section 21. The control section 21 includes control means (such as a CPU, a RAM, and a ROM) and performs processes, which will be discussed below (processes such as a service coordinate phase related to a status notification and a status change, associated control retrieval, approval WF merging, an associated control retrieval phase involved in execution of the approval WF). The control section 21 executes event assistance programs for the above purposes so that the control section 21 functions as a service coordination section 21 A and a WF coordination section 21 B as shown in Fig. 1. The service coordination section 21 A executes a process for coordinating with the service management systems 10. The WF coordination section 21 B executes a process for coordinating with the schedule management system 50 and the WF system 55.

The service coordination section 21 A includes a status notification section 211 and a status change section 212.

The status notification section 211 executes a notification process (broadcast) for each service management system 10 in accordance with the status of the approved event (approved or changed).

The status change section 212 executes a process for changing the status of each approved event based on notification about the situation change obtained from each service management system 10. The changing process is performed using a status change dictionary maintained by the status change section 212. The status change dictionary stores whether the status change of the approved event is necessary depending on the situation change notified by each service management system 10, and if the status change is to be performed, what steps should be taken by the event assistance system 20.

The WF coordination section 21 B includes an associated control retrieval section 213, an approval WF merging section 214, and an approval WF executing section 215.

The associated control retrieval section 213 detects any change in the application or details of the approved event and executes a process for retrieving a management event associated with the approved event and a control event related to each service management system 10.

The approval WF merging section 214 functions as an administrative control section and an authorized person determining section and executes a process for merging the approval workflows (approval WF) involved in necessary procedures depending on the event details (event attribute) based on the afore-mentioned control event. For this reason, the approval WF merging section 214 also executes a process for distributing to the officers/employees a specific task name and a specific job title in the line function that are involved in the procedure of the afore-mentioned approval workflow. Furthermore, the approval WF merging section 214 maintains an approval rules for determining the approval workflows. The approval rules define rules for determining the authorized people for approval such as prohibiting self-approval, in which the applicants approve their own application.

The approval WF executing section 215 executes approval workflow processes involved in registration of the application event or changing of the approved event via the WF system 55.

The event assistance system 20 is connected to the party management system 22, the business operation storage 23, and the event storage 24, which serve as an organization information storage in this embodiment.

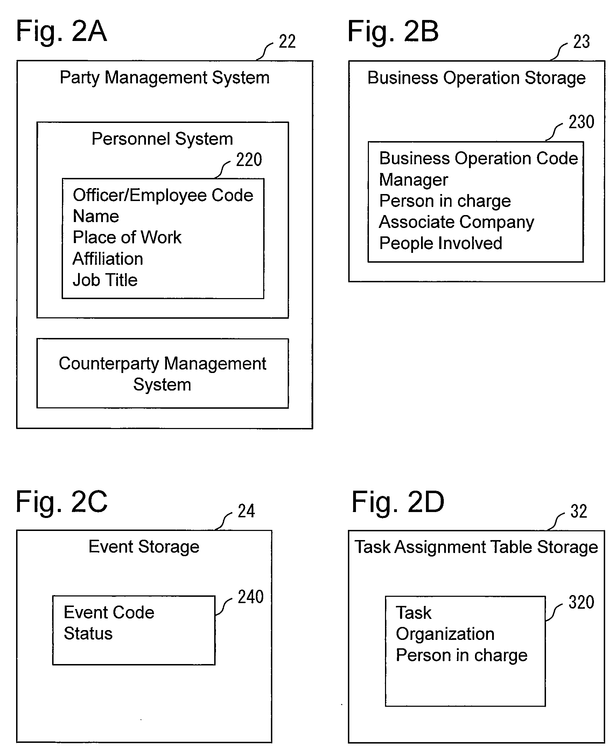

As shown in Fig. 2(a), the party management system 22 includes a personnel system and a counterparty management system. The personnel system of the party management system 22 stores party information 220 about the organization structure of the corporation and officers/employees belonging to each line function. The party information 220 stores data on officer/employee codes, names, the place of work, the affiliation, and the job title.

An officer/employee code data area stores data on identifiers for identifying the officers/employees.

A name data area stores data on the names of the officers/employees and outsiders.

A place of work data area stores data for identifying the work site of the officers/employees and the outsiders.

An affiliation data area stores data on identifiers for identifying the organization (department) to which officers/employees or outsiders belong.

A job title data area stores data on identifiers for identifying the job titles of officers/employees or outsiders.

The counterparty management system of the party management system 22 manages information about officers/employees (outsiders) of other corporations (external corporations) associated with events. The counterparty management system additionally stores information for identifying corporations (corporation codes) as party information 220.

As shown in Fig. 2(b), the business operation storage 23 stores a business operation management record 230 on people involved in the business operation. The business operation management record 230 is stored when a business operation to be performed by the officers/employees is registered. The business operation management record 230 stores data on a business operation code, a manager, a person in charge, an associate company, and people involved.

A business operation code data area stores data on identifiers for identifying business operations.

A manager data area stores data on an identifier (officer/employee code) for identifying the officer/employee who will manage the business operation.

A person in charge data area stores data on identifiers (officer/employee codes) for identifying the officers/employees who are in charge of the business operations.

An associate company data area stores data on identifiers for identifying other corporations that cooperate in the business operations and the officers/employees of other corporations (corporation codes and officer/employee codes in the counterparty's management system).

An involved people data area stores data on identifiers for identifying other departments related to the business operation and officers/employees of other departments (department codes and officer/employee codes).

As shown in Fig. 2(c), the event storage 24 stores an event management record 240 for managing an applied event obtained from the schedule management system 50 as an event to be managed. The event management record 240 is stored when event information about the schedule registered by an officer/employee is obtained. The event management record 240 stores data on the event code and the status.

An event code data area stores data on an identifier for identifying an applied event registered in the schedule management system 50.

A status data area stores data on the status of the event to be managed. In this embodiment, data on the status of the event to be managed and the participants are stored.

Furthermore, as shown in Fig. 1, the event assistance system 20 is connected to a control storage, which is a procedure DB 30 in this embodiment. The procedure DB 30 includes a task assignment table storage 32 and a policy storage 33.

As shown in Fig. 2(d), the task assignment table storage 32 stores a task assignment management record 320 for registering the officers/employees in charge of the task specified in each procedure. The task assignment management record 320 stores data on the task, the organization, and the person in charge.

A task data area stores data on an identifier for identifying a task.

An organization data area stores data on an identifier for identifying the organization for which the person in charge of the task is responsible.

A person in charge data area stores data on an identifier for identifying the officer/employee in charge of the task.

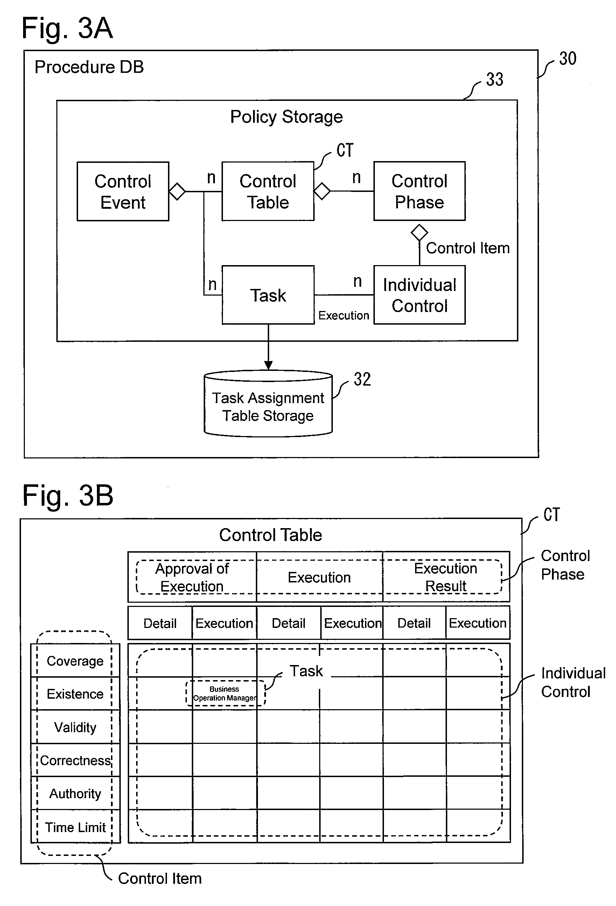

As shown in Fig. 3(a), "control event", which represents the business operation and the management target, "task" performer who is responsible for controlling the "control event", and "control table CT", which describes control details of "control event" are registered in the policy storage 33.

In the present embodiment, the business operation control for each event category and the management control for each of various management procedures are stored as "control event". "Control event" includes information for determining the necessity of the control event depending on the event details.

As the "task" performer, a suitable person may be individually appointed, or a job title or a role in a business operation may be designated.

As shown in Fig. 3(b), the "control table CT" is managed, as a phase to be controlled (control phase) in three steps including "approval of execution", in which approval or disapproval of event execution is determined, "execution", which is related to an event under execution and "execution result", which is related to after execution of an event. Furthermore, in each "control phase", specific "individual control" is defined for each of six "control items" including coverage, existence, validity, correctness, authority, and time limit. Each "task" is responsible for (executes) the "individual control" depending on their role.

The coverage means that events are recorded without any omission and overlaps. The coverage is ensured by registering the events to be executed. The present embodiment is an arrangement to control the service management systems 10 associated with events, and the service management systems 10 can be used on condition that event exist. This inevitably ensures the coverage.

The existence means that an event exists on a particular date. The existence is ensured by the evidence that the event has been executed.

The validity means that the execution and the details of an event are reasonable. The validity is ensured by confirmation or direction of a business operation manager.

The correctness means that the information has been correctly recorded and provided. The correctness is ensured by double checking and evidence.

The authority means that the information is protected from being used by anyone other than duly authorized people. The authority is ensured mainly by the function of the system (for example, IT application control (ITAP)).

The time limit means that the valid period or the end of period has been determined in advance. The time limit is ensured by the evidence that an event has been executed.

Furthermore, "individual control" includes a detail field and an execution field for each item.

The detail field stores specific details of the control.

The execution field stores a performer responsible for the "individual control". For example, control using an IT application (ITAP) and control by a task performer (double checking, confirmation, and approval) are recorded.

### Function of Event Assistance System 20

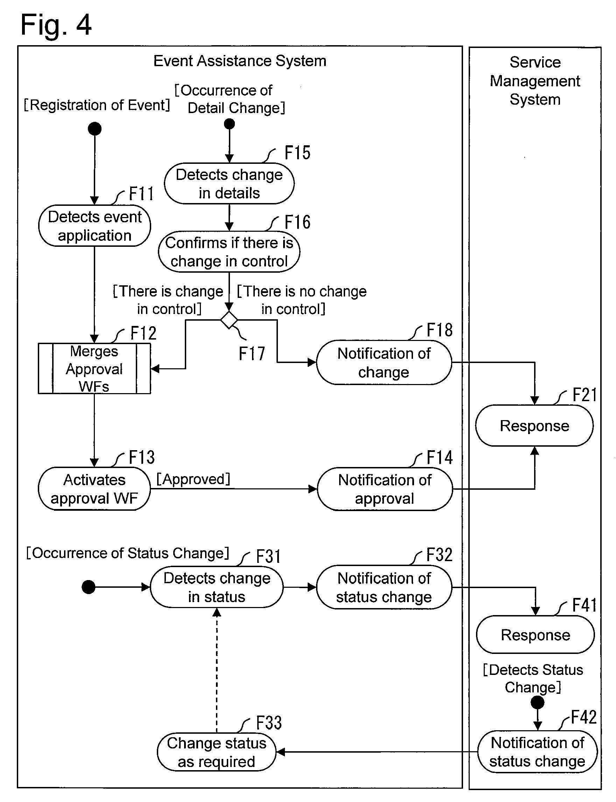

Overview of the entire processes performed by the event assistance system 20 and the service management systems 10 will now be described with reference to Fig. 4.

The control section 21 of the event assistance system 20 detects an event application registered in the schedule management system 50 (F11). The process is performed by the associated control retrieval section 213 of the WF coordination section 21 B.

The control section 21 then merges the approval workflows (F12). The process is performed by the approval WF merging section 214 of the WF coordination section 21 B.

The control section 21 subsequently starts the approval WF (F13). The process is performed by the approval WF executing section 215 of the WF coordination section 21 B.

If the event is approved in the approval workflow, the control section 21 notifies each service management system 10 of the approval (F14). The process is performed by the status notification section 211 of the service coordination section 21 A. In this process, each service management system 10 is notified of people who have expressed their intention to attend among the participants. If any of the participants of the approved event detects expression of attendance in the schedule management system 50, the control section 21 notifies each service management system 10 of the expression of attendance.

In this case, each service management system 10 responds in accordance with the notification as required (F21).

Furthermore, the control section 21 detects a change in the details of the event (including cancellation of the event) in the schedule management system 50 (F15).

In this case, the control section 21 confirms whether there is a control change (F16). If it is determined that there is a control change (in case in which "control change exists" in F17), the control section 21 performs the process for merging the approval workflows (F12) and the following processes as described above.

If it is determined that there is no control change (if "control change does not exist" in F17), the control section 21 notifies each service management system 10 of the change (F18).

The control section 21 detects a status change in the event or the participants in the schedule management system 50 (F31). The control section 21 notifies each service management system 10 of the status change (F32). The process is performed by the status change section 212 of the service coordination section 21 A.

In this case, each service management system 10 responds in accordance with the notification as required (F41).

If each service management system 10 senses a status change, the service management system 10 notifies the event assistance system 20 of the situation change (F42).

In this case, the control section 21 responds in accordance with the notification (F33). Accordingly, the control section 21 detects occurrence of the status change (F31).

### Process performed when an event is registered or the details are changed

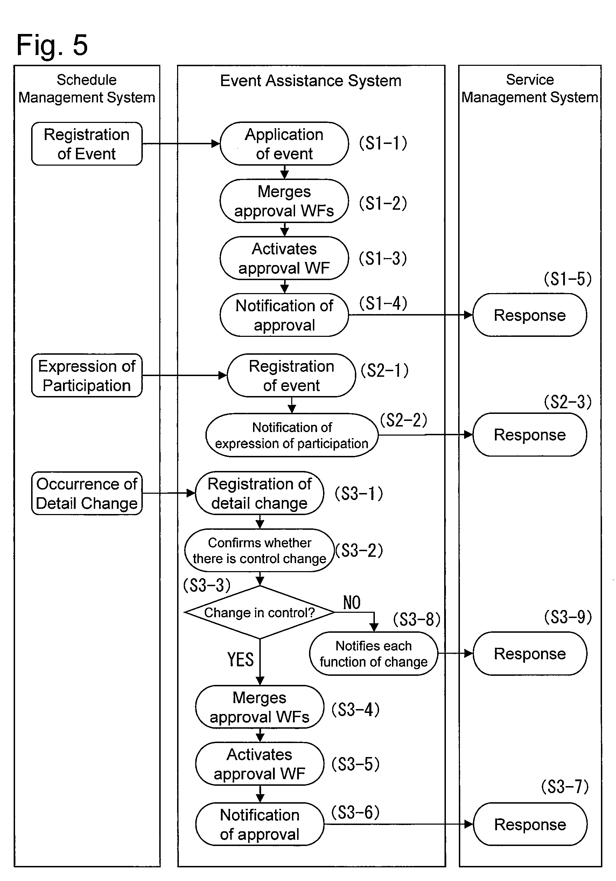

Processes performed when an event is registered or the details of an event are changed will now be described with reference to Fig. 5.

At first, the control section 21 detects an event registration in the schedule management system 50. The event registration includes data on the event code, the applicant, the date and time, the location, the event category, the business operation, the materials, and the participants.

In this case, the control section 21 executes an event application process (step S1-1). More specifically, the associated control retrieval section 213 of the control section 21 generates the event management record 240 and registers the event management record 240 in the event storage 24. The event management record 240 includes data on the event code and the status. The event is stored as Pending in the status data area of the event management record 240.

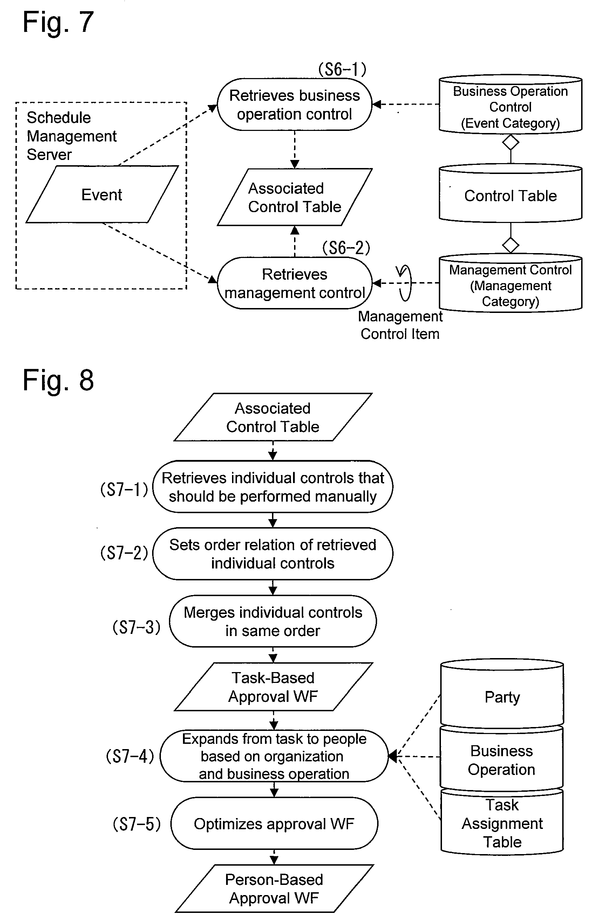

Subsequently, the control section 21 executes a process for merging the approval workflows (step S1-2). More specifically, the associated control retrieval section 213 of the control section 21 retrieves "individual control" items related to the applied event from the policy storage 33 of the procedure DB 30. The approval WF merging section 214 executes a process for generating the approval workflow based on the retrieved "individual controls". The process will be discussed below with reference to Figs. 7 and 8.

The control section 21 then executes an approval WF activation process (step S1-3). More specifically, the approval WF merging section 214 of the control section 21 directs the approval WF executing section 215 to execute the approval workflow. In this case, the approval WF executing section 215 routes the approval workflow in the WF system 55. If the event is approved through the approval workflow in the WF system 55, the approval result is recorded in the status data area of the event management record 240 of the event storage 24.

If the event is approved in the approval workflow, the control section 21 executes a notification process of the approval (step S1-4). More specifically, the status notification section 211 of the control section 21 notifies each service management system 10 of the approval of the event. The notification includes data on the event details.

In this case, each service management system 10 executes a response process corresponding to the notification as required (step S1-5). In this embodiment, each service management system 10 executes a process corresponding to the notification obtained from the event assistance system 20 as will be discussed below.

Furthermore, upon detection of any expression of participation (expression of attendance, expression of absence) from the participants involved in the approved event in the schedule management system 50, the control section 21 executes an event registration process (step S2-1). More specifically, the associated control retrieval section 213 of the control section 21 adds or deletes participants in a participant data area of the event management record 240 registered in the event storage 24. The status data area of the event management record 240 stores the expression of participation of the participants.

Subsequently, the control section 21 executes a notification process of the expression of participation (step S2-2). More specifically, the status notification section 211 of the control section 21 notifies each service management system 10 of the expression of participation from the participants of the approved event. This notification also includes data on the details of the event. In this case also, each service management system 10 executes a response process corresponding to the notification as required (step S2-3).

Furthermore, upon detection of any change in the details of the event (including cancellation of the approved event) in the schedule management system 50, the control section 21 executes a process for registering the changes in the details (step S3-1). More specifically, the associated control retrieval section 213 of the control section 21 modifies the details of the event management record 240 registered in the event storage 24.

Subsequently, the control section 21 executes a process for confirming whether there is a change in the control (step S3-2). More specifically, the associated control retrieval section 213 of the control section 21 retrieves the "individual controls" associated with the approved event from the policy storage 33 of the procedure DB 30. If there is a discrepancy in the "individual controls" due to the change in the details, the associated control retrieval section 213 determines that there is a control change.

If it is determined that there is a control change ("YES" in step S3-3), the control section 21 executes a process for merging the approval workflows (step S3-4), an approval WF activation process (step S3-5), and a notification process of the approval (step S3-6) in a manner similar to steps S1-2 to S1-4 as described above. In this case also, each service management system 10 executes a response process corresponding to the notification as required (step S3-7).

If it is determined that there is no control change ("NO" in step S3-3), the control section 21 executes a change notification process (step S3-8). More specifically, the status notification section 211 of the control section 21 notifies each service management system 10 that there has been a change in the details of the approved event. This notification also includes data on the details of the event. In this case also, each service management system 10 executes a response process corresponding to the notification as required (step S3-9).

### Process performed when occurrence of a status change in the event or the participants is detected

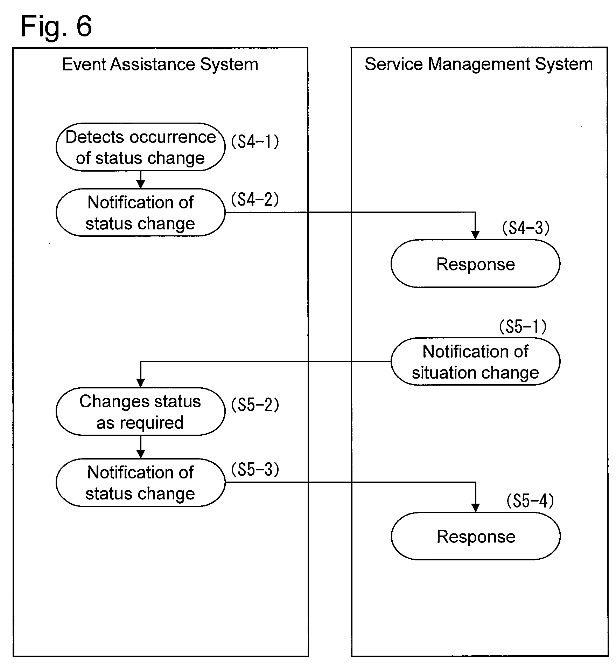

A process performed when the occurrence of a status change in the event or the participants is detected in the event assistance system 20 will now be described with reference to Fig. 6.

In this case, the control section 21 executes a process for detecting the occurrence of a status change in the schedule management system 50 (step S4-1). More specifically, the status change section 212 of the control section 21 changes the status stored in the event management record 240 of the event storage 24 based on the detail of the status change.

In this case, the control section 21 executes a notification process of the status change (step S4-2). More specifically, the status notification section 211 of the control section 21 notifies each service management system 10 of the occurrence of a status change. This notification also includes data on the details of the event. In this case, each service management system 10 executes a response process corresponding to the notification as required (step S4-3).

Furthermore, upon sensing the status change, each service management system 10 executes a notification process of the situation change (step S5-1). More specifically, each service management system 10 detects a situation change in the service provided in relation to the approved event. If each service management system 10 detects a situation change in the service associated with the event code, the service management system 10 notifies the event assistance system 20 of the occurrence of the status change. The notification includes data on the event code.

In this case, the control section 21 executes a process for changing the status as required (step S5-2). More specifically, the status change section 212 of the control section 21 obtains the notification from the service management system 10. The status change section 212 determines whether the status change in the approved event is necessary using the status change dictionary. To perform the status change, the status change section 212 retrieves, from the event storage 24, the event management record 240 that stores the event code included in the notification. The status change section 212 changes the status stored in the event management record 240 based on the detail of the status change. In this case, the event assistance system 20 executes a notification process for notifying the service management system 10 of the status change (step S5-3). In this case also, each service management system 10 executes a response process corresponding to the notification as required (step S5-4).

### Process for creating associated control table

A process for creating an associated control table will now be described with reference to Fig. 7.

In this embodiment, the control section 21 executes a retrieval process for retrieving business operation control (step S6-1). More specifically, the associated control retrieval section 213 of the control section 21 identifies the event category in the event information obtained from the schedule management system 50. The associated control retrieval section 213 identifies, in the policy storage 33, a control table CT (control table CT of business operation control) associated with the control event corresponding to the event category. Subsequently, the associated control retrieval section 213 identifies, in the control table CT of the business operation control, the item stored in the "approval of execution" as the business operation individual control.

The control section 21 then executes a process for retrieving the management control (step S6-2). More specifically, the associated control retrieval section 213 of the control section 21 identifies the event detail based on the event information obtained from the schedule management system 50. The associated control retrieval section 213 subsequently identifies, in the policy storage 33, a control table CT (control table CT of management control) associated with the control event corresponding to the management category included in the event detail. More specifically, the associated control retrieval section 213 identifies the control table CT, in which the requirement of the control item "coverage" of the control phase "approval of execution" satisfies the event detail. This, however, excludes a case in which the fields other than the "coverage" are empty.

### Generation process of approval workflow

The generation process of the approval workflow using the associated control table will now be described with reference to Fig. 8.

In this embodiment, first, the control section 21 executes a process for retrieving individual controls. This process has been required to be done manually (step S7-1). More specifically, the approval WF merging section 214 of the control section 21 retrieves the individual controls, in which the control phase of the control table CT (control table CT of the business operation control and the management control) identified by the associated control retrieval section 213 is "approval of execution", and execution of the individual control is a task.

The control section 21 then executes an order relation setting process for the retrieved individual controls (step S7-2). More specifically, the approval WF merging section 214 of the control section 21 determines the order relation of the control tables CT that have the retrieved individual controls based on the requirement stored in the detail area of the control item "coverage". Similarly, the approval WF merging section 214 determines the order relation of the individual controls in each control table CT based on the requirement stored in the detail area of the individual controls that are included in the same control table CT.

Subsequently, the control section 21 executes a process for merging the individual controls in the same order (step S7-3). More specifically, the approval WF merging section 214 of the control section 21 integrates the individual controls the execution areas of which in the same rank have the same tasks and creates a task-based approval workflow.

Subsequently, the control section 21 executes a process for expanding from a task to people based on the organization and the business operation (step S7-4). More specifically, the approval WF merging section 214 of the control section 21 refers to the records stored in the party management system 22, the business operation storage 23, and the task assignment table storage 32 to determine the authorized people to execute the detail of the individual controls of the task-based approval workflow (authorized people responsible for determining whether the individual controls are feasible, good, or bad). If two or more officers/employees have the authority in execution, all those officers/employees are determined as people authorized for execution.

The control section 21 then executes a process for optimizing the approval WF (step S7-5). More specifically, the approval WF merging section 214 of the control section 21 determines the common person authorized for execution, while taking into consideration the order relation of high order and low order in each individual control. If the common person authorized for execution can be set without violating the approval rules, the approval WF merging section 214 integrates the approval workflows. In this manner, the approval WF merging section 214 integrates the execution authorities in the task-based approval workflow and creates a person-based approval workflow.

### Examples of status transition

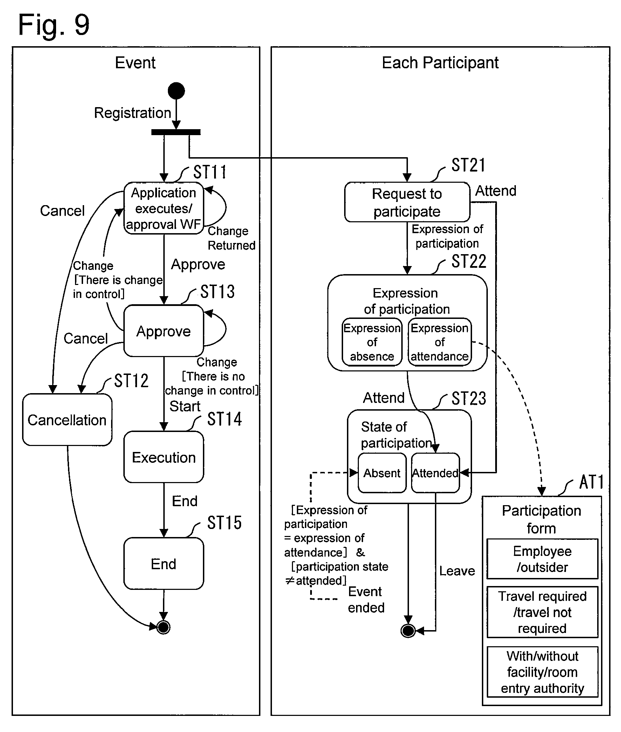

The status transition in application and execution of an event and participants of the approved event will now be described with reference to Fig. 9.

Upon detection of a new event registered in the schedule management system 50, the control section 21 recognizes the event as an applied event and sets the status to Pending (ST11). The control section 21 generates and executes an approval workflow of the applied event. If the details of the applied event are changed during Pending, the status remains in Pending. Likewise, in a case in which the approval workflow is started and the application is returned to the applicant by an authorized person, the status remains in Pending.

Furthermore, if the application is cancelled during Pending, the status of the application is set to Cancelled (ST12).

If the application is approved, the status is set to Approved (ST13). If the detail of the approved event is changed in the approved status, the status is changed depending on whether there is a change in the control target. If no change occurs in the control, the status is maintained as Approved (ST13). If a change occurs in the control target, the status returns to Pending (ST11), and an approval workflow requesting an approval of the change is generated and executed. It is also possible to cancel the already approved event. In this case, similar to the withdrawal during pending, the status is set to Cancelled.

When the approved event is started, the status is set to In Progress (ST14). Furthermore, when the approved event ends, the status is set to Ended (ST15).

If the participants for the approved event are set, the status of the participants is set to Participation Requested (ST21). If the participants express their intention regarding participation, the status is set to Expression of Absence or Expression of Attendance depending on the details of the expression (ST22). The actual participation state of the participants who have expressed their intention to attend includes two statuses, absence and attendance (ST23). The status of the participant who initially plans to attend the event is updated from Participation Requested (ST21) to Participation State (ST23). Regardless of whether there is expression of intention regarding participation and the detail of the expression of intention regarding participation, in a case in which the participant has actually attended the event, the actual participation state is updated to Attended.

Furthermore, besides the status of Expression of Attendance (ST22), the participants have the attribute of participation form (AT1). More specifically, there may be a case in which a participant is an officer/employee or a case in which a participant is an outsider, and there may be a case in which a participant needs to travel or a case in which a participant does not need to travel depending on the work site of the participant. In the present embodiment, in regard to the entry control, there may be a case in which a participant has the authority to enter the facility/room and a case in which a participant does not have the authority to enter the facility/room. In this embodiment, if a participant needs to travel due to the work site, the participant has no authority to enter the room, and a new setting for the facility/room entry is necessary. If a participant does not need to travel, the participant has the authority to enter the room, and a new setting for the facility/room entry is unnecessary.

If the participants whose status in the expression of participation (ST22) is Expression of Attendance and the status in the participation state (ST23) is Attended have all left the event, it is determined that the approved event has ended. In regard to people who have set to participate, but the status in the participation state (ST23) is not "Attended" at the end of the approved event, the participation state (ST23) will be "Absent" regardless of the participation request status and the expression of participation status.

### [Example of holding a meeting]

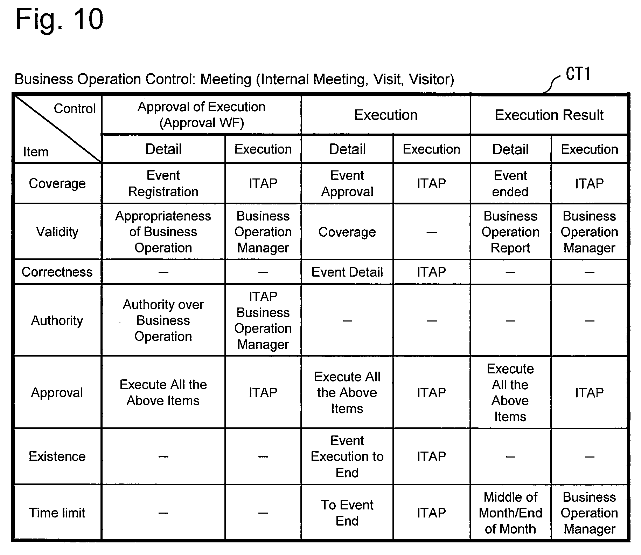

An example of holding a meeting will now be described with reference to Figs. 10 to 19.

### Example of control table

An example of a control table used in managing a meeting in which the above-mentioned status transition occurs will now be described with reference to Figs. 10 to 13.

Fig. 10 shows a control table CT1 of "Business Operation Control: Meeting (Internal Meeting, Visit, Visitor)". In this embodiment, "ITAP" refers to "IT application control".

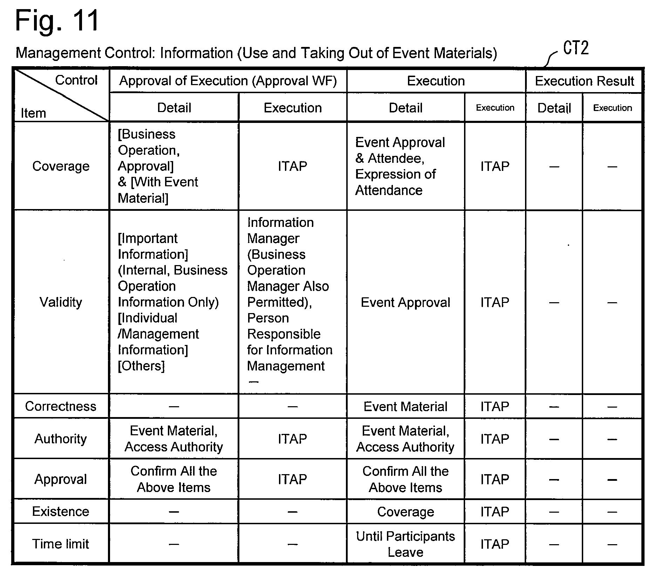

Fig. 11 shows a control table CT2 of "Management Control: Information (Use and Taking out of Event Materials)".

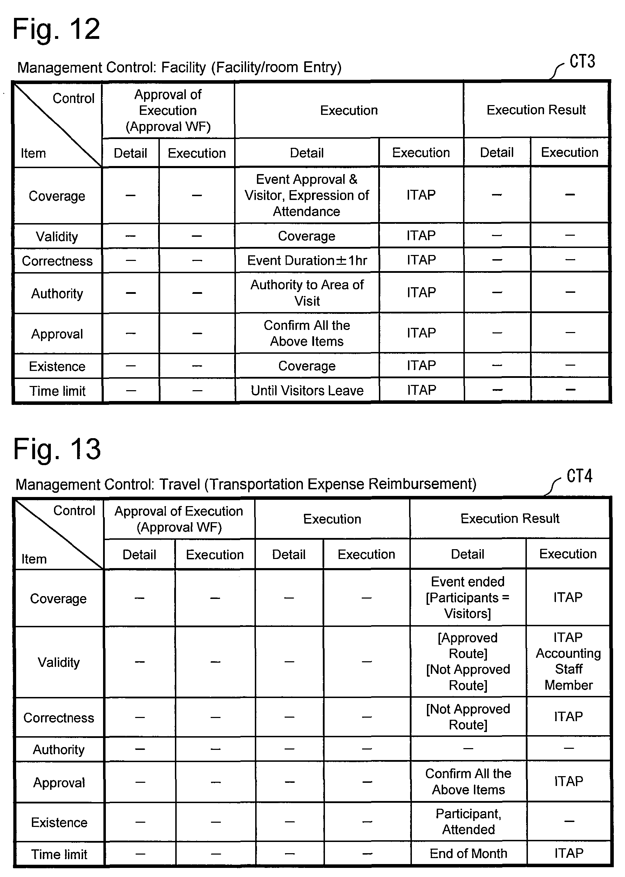

Fig. 12 shows a control table CT3 of "Management Control: Facility (Facility/room Entry)".

Fig. 13 shows a control table CT4 of "Management Control: Travel (Transportation Expense Reimbursement)". The control table CT4 stores individual control performed after execution of the event.

### Example of event management

An event management process performed when holding the above-described meeting will now be described with reference to Figs. 7, 8, and 14 to 19.

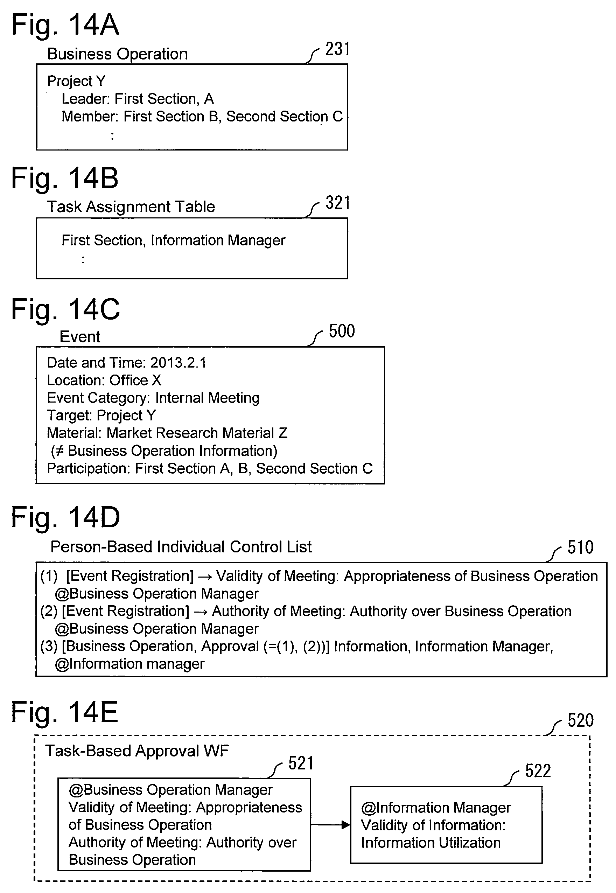

As shown in Fig. 14(a), assume that a business operation management record 231 is stored in the business operation storage 23. People involved in a project Y (officers/employees A, B, C...) is registered in the business operation management record 231.

Furthermore, as shown in Fig. 14(b), assume that a task assignment management record 321 is stored in the task assignment table storage 32. Information managers of related departments (officers/employees A, Z...) are registered in the task assignment management record 321.

As shown in Fig. 14(c), assume that an event 500 is registered for a meeting.

First, as shown in Fig. 7, the control section 21 executes a process for creating an associated control table.

In this embodiment, the control section 21 executes a process for retrieving business operation control (step S6-1). More specifically, the associated control retrieval section 213 of the control section 21 specifies, in the policy storage 33 of the procedure DB 30, the control table CT (control table CT for business operation control) in which the event category of the event 500 (office meeting) is stored as the control event. In this embodiment, the control table CT1 for "Meeting" shown in Fig. 10 is specified.

The control section 21 then executes a process for retrieving the management control (step S6-2). More specifically, the associated control retrieval section 213 of the control section 21 specifies the control table CT (control table CT for the management control) that matches with the event detail of the event 500 as the control event. In this case, the control table CT2 of "Information" shown in Fig. 11 is specified.

Subsequently, as shown in Fig. 8, the control section 21 executes a process for generating the approval workflow.

First, the control section 21 executes a process for retrieving the individual control (step S7-1) that is required to be done manually. More specifically, the approval WF merging section 214 of the control section 21 identifies, in the associated control table, the individual controls that require confirmation by the manager or the task performer.

This process generates a person-based individual control list 510 for the individual control shown in Fig. 14(d), which is required to be done manually. The person-based individual control list 510 shows that the validity (appropriateness of business operation) and the authority (authority over business operation) of the applied event (meeting) need to be confirmed by the business operation manager. Furthermore, the person-based individual control list 510 shows that if the validity and the authority of the applied event (meeting) are confirmed, the validity of the information management needs to be confirmed by the information manager.

Furthermore, the control section 21 executes a process for setting the order relation of the retrieved individual controls (step S7-2). The control section 21 executes a process for merging the individual controls in the same order (step S7-3).

The process generates a task-based approval workflow 520 shown in Fig. 14(e). That is, the business operation manager first performs the confirmation process 521 of "Validity of Meeting" and "Authority of Meeting", and the information manager subsequently performs the confirmation process 522 of "Validity of Information (in terms of management)".

The control section 21 then executes a process for expanding from a task to people based on the organization and the business operation (step S7-4). More specifically, the approval WF merging section 214 of the control section 21 identifies the target project Y in the event information of Fig. 14(c) and identifies the officer/employee A, who is the leader of the project Y, in the business operation management record 231 of Fig. 14(a) as the business operation manager. Also, in regard to the information managers, the approval WF merging section 214 of the control section 21 identifies the officers/employees (A, Z) as first section information managers in the task assignment management record 321 of Fig. 14(b).

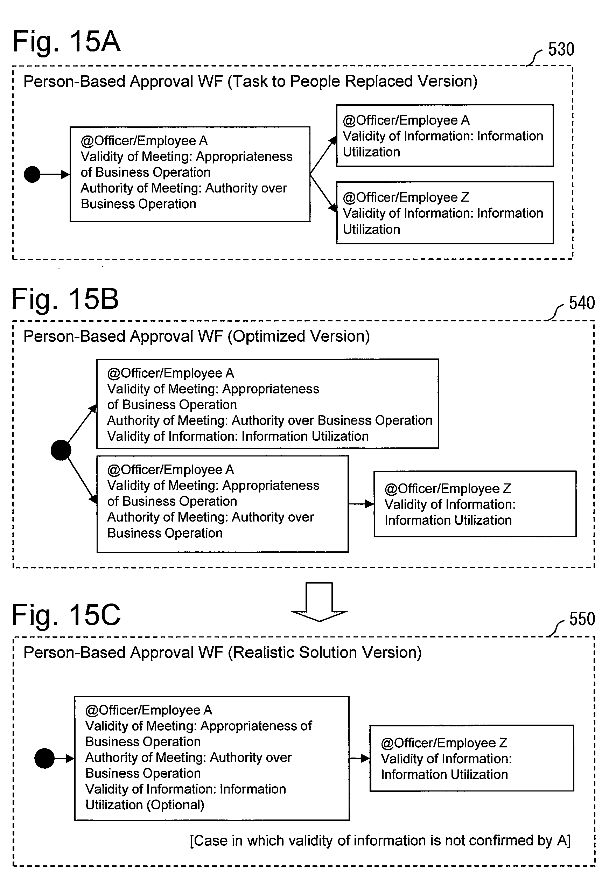

The process generates a person-based approval workflow 530 shown in Fig. 15(a). In the person-based approval workflow 530, the officer/employee A confirms the "Validity of Meeting" and the "Authority of Meeting". Furthermore, the officer/employee A or the officer/employee Z confirms the "Validity of Information". As a result, an approval workflow in which the tasks are replaced by people is generated.

The control section 21 then executes a process for optimizing the approval WF (step S7-5). More specifically, the approval WF merging section 214 of the control section 21 identifies a common person authorized for execution among the individual controls. In this case, the individual controls are integrated for each person authorized for execution who is assigned with the approval workflow. That is, the officer/employee A has the authority to confirm "Validity of Meeting", "Authority of Meeting", and "Validity of Information".

In this case, like an optimized approval workflow 540 (person-based approval WF (optimized version)) shown in Fig. 15(b), the officer/employee A may simultaneously perform confirmation of all "Validity of Meeting", "Authority of Meeting", and "Validity of Information". Alternatively, the officer/employee A may perform confirmation of "Validity of Meeting" and "Authority of Meeting", and the officer/employee Z may perform confirmation of "Validity of Information".

Furthermore, when the confirmation operation is performed in the actual WF system, it is more practical to integrate the authorized people in logically the same order. More specifically, as an realistic version of the approval workflow 550 (person-based approval WF (realistic solution version)) shown in Fig. 15(c), first, the officer/employee A is required to perform a confirmation operation, in which "Validity of Meeting" and "Authority of Meeting" are mandatory, and "Validity of Information" is optional. If the officer/employee A performs all the confirmation, the approval workflow ends, and the applied event is approved. If the officer/employee A does not confirm "Validity of Information", the confirmation operation of "Validity of Information" by the officer/employee Z is mandatory.

### Coordination with service management systems

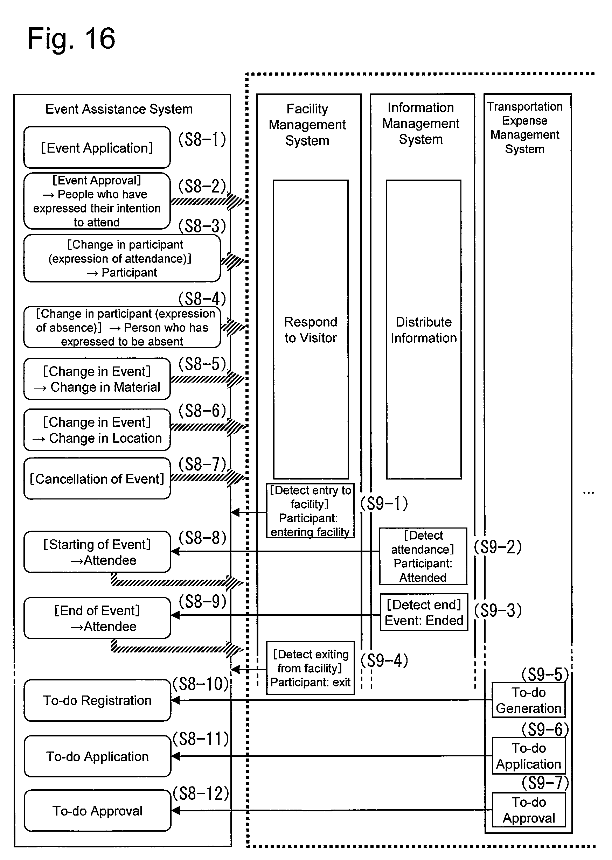

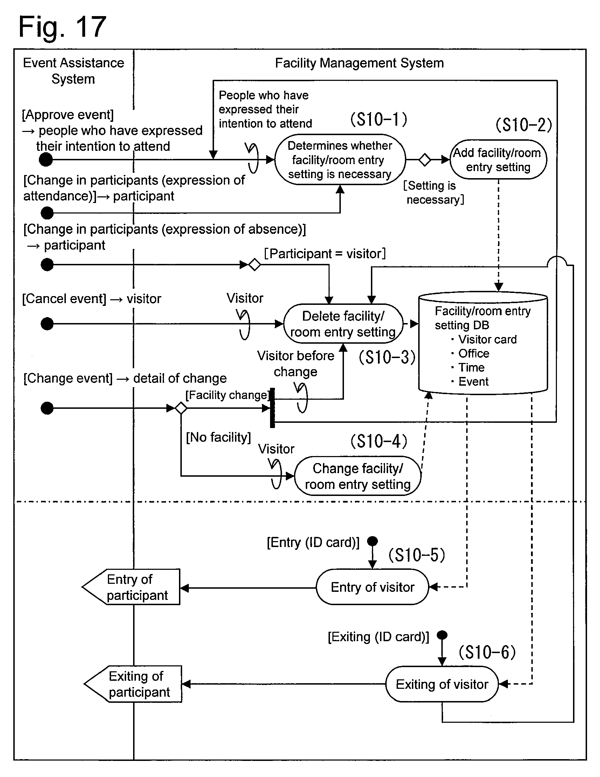

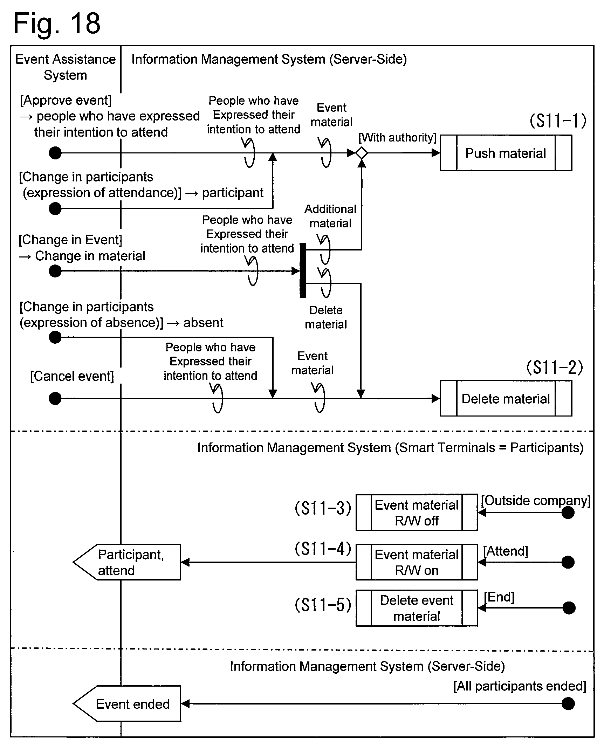

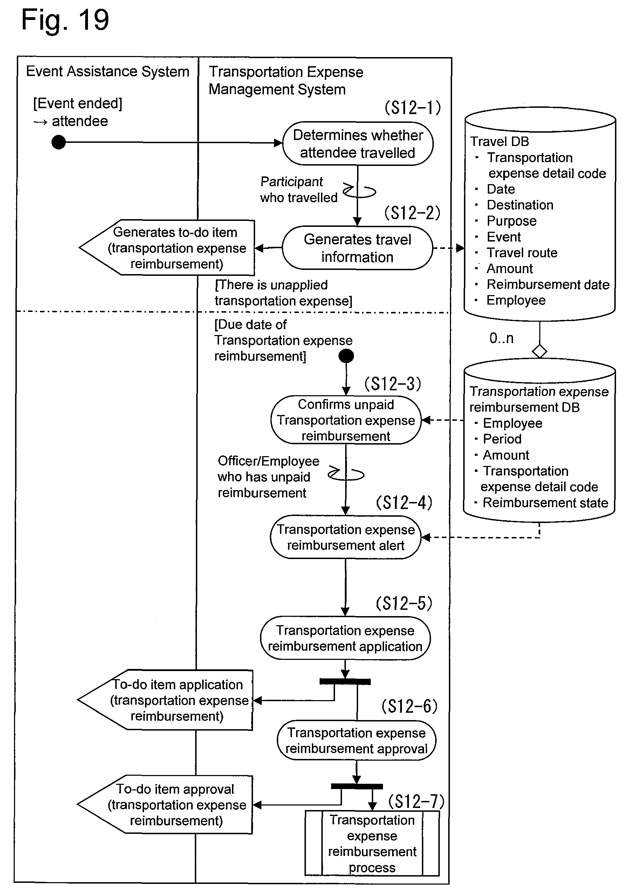

Coordination between the event assistance system 20 and the service management systems 10 will now be described with reference to Fig. 16. The coordination in the case of the above-mentioned meeting will be discussed below. The present embodiment assumes a case in which the event assistance system 20 coordinates with the service management systems 10, which include the facility management system 10a, the information management system 10b, and the transportation expense management system 10c. The process of the facility management system 10a will be described with reference to Fig. 17, the process of the information management system 10b will be described with reference to Fig. 18, and the process of the transportation expense management system 10c will be described with reference to Fig. 19 below.

When an event is applied (step S8-1), the event has not yet been approved, and the event assistance system 20 and the service management systems 10 do not coordinate with each other.

Before the applied event is approved and is actually executed, operations related to the event details are performed as follows.

Event approval (step S8-2)
Expression of attendance from participants (step S8-3)
Expression of absence from participants (step S8-4)
Material change for approved event (step S8-5)
Location change for approved event (step S8-6)
Cancellation of approved event (step S8-7)

The operations related to the event details (steps S8-2 to S8-7) are notified to the service management systems 10 from the service coordination section 21 A (notifications F14 and F18 in Fig. 4), and the service management systems 10 respond in accordance with the notifications.

Activities involved in the execution of the approved event are notified to the event assistance system 20 as situation changes detected by the service management systems 10 (steps S9-1 to S9-4).

For example, upon detection of the entry of any of the participants to the facility, the facility management system 10a notifies the event assistance system 20 of the entry of the participant to the facility as the notification F42 in Fig. 4 (step S9-1).

Upon detection of the attendance of any of the participants, the information management system 10b notifies the event assistance system 20 of the attendance of the participant as the notification F42 in Fig. 4 (step S9-2).

In this case, the control section 21 recognizes (step S8-8) starting of the event corresponding to step S5-2 (Fig. 6) and shifts the status of the event to In Progress (ST14 in Fig. 9). The control section 21 notifies the service management systems 10 that the status of the event is shifted to In Progress (notification F32 in Fig. 4).

If the information management system 10b detects the end of the event, the information management system 10b notifies the event assistance system 20 of the end of the event (step S9-3) in response to the notification F42 in Fig. 4.

In this case, the control section 21 recognizes the end of the event (step S8-9) corresponding to step S5-2 (Fig. 6) and shifts the status of the event to Ended (ST15 in Fig. 9). The control section 21 notifies the service management systems 10 that the status of the event is shifted to Ended (notification F32 in Fig. 4).

If the facility management system 10a detects an exit of any of the participants, the facility management system 10a notifies the event assistance system 20 of the exit of the participant (step S9-4) in response to the notification F42 in Fig. 4.

Upon receipt of the event end notification, the transportation expense management system 10c performs processes (generation, application, approval) for reimbursing the event attendees for the transportation expense (step S9-5 to S9-7).

### Processes performed by service management systems

Processes executed in the service management systems 10 will be described with reference to Figs. 17 to 19 in the case of executing the above-described example of the meeting.

### Process for managing facility/room entry

A process for managing the facility/room entry will now be described with reference to Fig. 17. The process is performed in response to the notification from the event assistance system 20 shown in Fig. 16 (Fig. 4). "Looped-arrow" symbols indicate repetition. "Diamond" symbols indicate determination. The facility management system 10a includes a facility/room entry setting DB for managing entry to a facility and entry to a room. The facility/room entry setting record of the facility/room entry setting DB stores the visitor codes, the office, the time, and the data on the event.

The visitor code data area stores the officer/employee codes stored in the party management system 22 to identify the visitors.

The office data area stores data on the identifier for identifying the office that the visitor visits.

The time data area stores data on the month, day, year, and the time at which the visitor visits corresponding to the time at which the event is held.

The event data area stores data on the identifier (event code) for identifying the approved event, which is the purpose of the visit.

Information processing executed by the facility management system 10a will now be described.

If the facility management system 10a receives the event approval notification from the control section 21 (step S8-2 in Fig. 16), the facility management system 10a executes the facility/room entry determination process for people who have expressed their intention to attend the event (meeting)(step S10-1). More specifically, the facility management system 10a checks whether each of the people who have expressed their intention to attend has the authority to enter the facility/room of the location at which the event (meeting) will be held. The facility management system 10a determines, based on the result, the participation form of the people who have expressed their intention to participate, whether the people who have expressed their intention to participate have the authority to enter the facility/room (AT1).

If any of the people who have expressed their intention to attend does not have the authority to enter the facility/room of the location where the event (meeting) will be held (hereinafter, referred to as a visitor), the facility management system 10a executes a process for adding a facility/room entry setting (step S10-2). More specifically, the facility management system 10a generates a facility/room entry setting record, which includes data on the visitor code, the office, the time, and the event, and stores the record in the facility/room entry setting DB for the person who has expressed his or her intention to attend. The facility management system 10a generates, for the outsiders, a two-dimensional code in which the event code, the corporation name, and the name of the visitor are stored. The facility management system 10a transmits the two-dimensional code to portable terminals of the outsiders.

Furthermore, upon receipt of a notification of a change (expression of attendance) in the participants of the approved event from the control section 21 (step S8-3 in Fig. 16), the facility management system 10a executes, for a participant who has additionally expressed his or her intention to attend, a process for determining whether a facility/room entry setting is necessary (step S10-1) and, if necessary, adds a facility/room entry setting (step S10-2).

Upon receipt of a notification of a change (expression of absence) in the participants of the approved event from the control section 21 (step S8-4 in Fig. 16), the facility management system 10a executes a process for eliminating the facility/room entry setting if the person who has expressed his or her intention to be absent is a visitor (step S10-3). More specifically, the facility management system 10a eliminates the facility/room entry setting record of the event for the visitor from the facility/room entry setting DB.

Furthermore, upon receipt of a notification that the approved event has been cancelled from the control section 21 (step S8-7 in Fig. 16), the facility management system 10a also eliminates the facility/room entry setting for the visitors (step S10-3).

Upon receipt of a notification of a change in the approved event from the control section 21, the facility management system 10a first determines whether it is a change in the facility. If it is a change in the facility (step S8-6 in Fig. 16), the facility management system 10a performs a process for eliminating the facility/room entry setting for the visitors (step S10-3).

The facility management system 10a further executes, for each of the people who have expressed their intention to attend, a process for determining whether a facility/room entry setting is required for the facility after the change (step S10-1) and, if necessary, executes a process for adding the facility/room entry setting (step S10-2).

If no change in the facility is made, the facility management system 10a executes a process for changing the setting for the visitors (step S10-4). For example, as for a change in the time of the approved event, the time of the facility/room entry setting record stored in the facility/room entry setting DB is changed.

If a visitor is an officer/employee, based on the facility/room entry setting record information of the facility/room entry setting DB, the visitor can enter the facility/room with an ID card if it is close to the time stored in the facility/room entry setting DB (the time at which the event is held). When actually entering the facility/room, the visitor holds an ID card over a relevant gate opening/closing card reader.

If a visitor is an outsider from another corporation, the visitor does not have the ID card. In this case, an external visitor ID card is lent at the front desk. More specifically, a two-dimensional code reader located at the facility reception reads the two-dimensional code sent to the visitor and identifies the event and the visitor. The external visitor ID card that is lent to the visitor is subsequently read by the card reader to link the event with the visitor so that the external visitor ID card is associated with the facility/room entry setting record information of the facility/room entry setting DB. Thus, similar to the case of the officers/employees, the visitor can enter the facility/room with the external visitor ID card if it is close to the time at which the event is held.

Upon detection of an entry of a visitor to the facility, the facility management system 10a executes a visitor entry processing (step S10-5). In this case, the facility management system 10a notifies the event assistance system 20 of the entry of the visitor to the facility (step S9-1 in Fig. 16).

Furthermore, the facility management system 10a detects an exit of a visitor from the facility through a facility exit operation with the IC card in a case in which the visitor is an officer/employee and through returning of the external visitor ID card to the reception in the case with the outsiders. Upon detection of the exit, the facility management system 10a executes a visitor exit processing (step S10-6). In this case, the facility management system 10a notifies the event assistance system 20 of the exit of the visitor (step S9-4 in Fig. 16).

### Information management process

The information management process will now be described with reference to Fig. 18. The information management system 10b includes an event material DB for distributing information to the participants. The event material DB stores distribution materials (event materials) that are associated with the event code and registered by the applicant of the event. Furthermore, the distribution materials are ranked general, important, and confidential according to the importance of the information. The information management system 10b is connected to smart terminals via a network. The smart terminals are computer terminals for viewing information for the events.

The information processing executed in the information management system 10b will now be described.

Upon receipt of the approval notification for the event from the control section 21 (step S8-2 in Fig. 16), the information management system 10b sends (pushes) distribution materials that can be viewed in advance to relevant smart terminals of the people who have expressed their intention to attend (step S11-1). More specifically, based on the affiliation and the job title of the people who have expressed their intention to attend and the importance of the distribution materials, the information management system 10b determines the distribution materials that can be viewed in advance by each of the people who have expressed their intention to attend according to their authority to access the event materials. The information management system 10b pushes the distribution materials that have been determined to be viewable in advance to the relevant smart terminals of the people who have expressed their intention to attend.

Upon receipt of a notification of a change in the participants (expression of attendance) of the approved event from the control section 21 (step S8-3 in Fig. 16), the information management system 10b also pushes the distribution materials that can be viewed in advance to the relevant smart terminal of the new person who has expressed his or her intention to attend as described above (step S11-1).

Furthermore, upon receipt of a notification of a change (distribution materials) in the approved event from the control section 21 (step S8-5 in Fig. 16), the information management system 10b pushes the distribution materials that can be viewed in advance among the additional materials to the relevant smart terminals of the people who have expressed their intention to attend as described above (step S11-1).

If there is any material to be removed, the information management system 10b deletes the material to be removed from the relevant smart terminals of the people who have expressed their intention to participate (step S11-2). More specifically, the information management system 10b instructs the relevant smart terminals of the people who have expressed their intention to attend to delete the material to be removed. The smart terminals delete the material that has been instructed to be removed if there is any.

Upon receipt of a notification of a change (expression of absence) in the participants of the approved event from the control section 21 (step S8-4 in Fig. 16), the information management system 10b deletes the material to be removed from the relevant smart terminal of the person who has expressed his or her intention to be absent (step S11-2).

If the approved event is cancelled by the control section 21 (step S8-7 in Fig. 16), the information management system 10b deletes the event materials from the relevant smart terminals of all the people who have expressed their intention to attend (step S11-2).

If the information management system 10b detects that the smart terminals of the participants are outside the company, the information management system 10b switches off the access authority (R/W function) to the event materials (step S11-3).

Upon detection of the attendance of a participant in the approved event (if it is detected that the participant is at the location where the event is held during the duration of the event), the information management system 10b switches on the access authority (R/W function) to the event materials (step S11-4). The information management system 10b notifies the event assistance system 20 of the attendance of the participant. The notification of the attendance of the participant includes information for identifying the event and the participant.

Furthermore, upon detection of the end of the approved event (upon detection of the end of the event duration or leaving of the participants from the event location), the information management system 10b deletes the event materials (step S11-5).

If the information management system 10b detects the end of all the participants, the information management system 10b sends an end notification of the event to the event assistance system 20. The event end notification includes information for identifying the event.

### Management process for transportation expense reimbursement

The management process for transportation expense reimbursement will now be described with reference to Fig. 19. The transportation expense management system 10c is connected to a travel DB and a transportation expense reimbursement DB. The travel DB stores a transportation expense detail record. The transportation expense detail record stores the transportation expense detail code, the date, the destination (event location), the purpose (event category), the event, the travel route, the amount, the reimbursement date, and the data on officers/employees.

The transportation expense detail code data area stores data on the identifier for identifying the transportation expense detail records.

The date data area stores data on the date on which the event is held.

The destination data area stores data for identifying the event location.

The purpose data area stores data for identifying the event category.

The event data area stores data on the identifier (event code) for identifying the approved event in which the participant participated.

The travel route data area stores data on the travel route.

The amount data area stores data on the amount of the transportation expense required for travel.

The reimbursement date data area stores the month, day, and year of the application of the reimbursement.

The officer/employee data area stores data on the identifier (officer/employee code) for identifying the officer/employee who travelled for the approved event.

The transportation expense reimbursement DB stores the transportation expense reimbursement management record. The transportation expense reimbursement management record stores data on the officers/employees, the period, the amount, the transportation expense detail code, and the reimbursement state.

The officer/employee data area stores data on the identifier (officer/employee code) for identifying the officer/employee to whom the reimbursement for transportation expense is to be made.

The period data area stores data on the period during which the transportation expense is subject to reimbursement. In the present embodiment, the data is set to each period determined by the due date of the transportation expense reimbursement (for example, April 2013).

The amount data area stores data on the amount subject to reimbursement for the officer/employee.

The transportation expense detail code data area stores data on the identifier for identifying the transportation expense detail record of the transportation expense subject to reimbursement.

The reimbursement state data area stores flags for identifying the reimbursement state to the officer/employee.

The transportation expense reimbursement management record of the transportation expense reimbursement DB maintains the transportation expense detail record in the travel DB during the period (period subject to reimbursement) as elements.

The information processing executed by the transportation expense management system 10c will now be described.

Upon receipt of a notification of the end of the event from the control section 21 (step S8-9 in Fig. 16), the transportation expense management system 10c executes an attendee's travel determination process (step S12-1). More specifically, the transportation expense management system 10c identifies the officers/employees (traveled participants) who have traveled for attending the event among the attendees. More specifically, the transportation expense management system 10c determines the traveled participants by comparing the place of work of the officers/employees with the location of the event (meeting).

The transportation expense management system 10c executes a process for generating the travel information for each of the traveled participants (step S12-2). More specifically, the transportation expense management system 10c generates the following transportation expense detail record for each of the traveled participants based on the event information that caused the travel and stores the record in the travel DB.
Date of transportation expense detail record = event date
Destination of transportation expense detail record = event location
Purpose of transportation expense detail record = event category
Event associated with transportation expense detail record = event ID
Officers/employees associated with transportation expense detail record = officer/employee codes of traveled participants

If the destination of the event is the company's own office or a client's office involved in, for example, a project, a travel route may be set as the approved travel route and a predetermined value may be set for the amount. In this case, the transportation expense management system 10c maintains the travel route and a default value of the amount for the company's own office or the client's office.

If the transportation expense reimbursement DB does not have an unpaid transportation expense reimbursement management record in the period subject to reimbursement in which the event date related to the traveled participant is included, the transportation expense management system 10c generates the transportation expense reimbursement management record of the period subject to reimbursement in which the event date related to the traveled participant is included. The transportation expense detail code of the previously generated transportation expense detail record is stored in the transportation expense reimbursement management record so that both records are linked together.

The transportation expense management system 10c transmits a to-do item notification about the transportation expense reimbursement to the event assistance system 20 (step S9-5 in Fig. 16). Upon receipt of the notification, the event assistance system 20 registers the transportation expense reimbursement as a to-do item of the relevant traveled participant in the schedule management system 50 (step S8-10 in Fig. 16).

If the transportation expense reimbursement DB has the unpaid transportation expense reimbursement management record in the period subject to reimbursement in which the event date related to the traveled participant is included, the transportation expense reimbursement management record maintains the prior transportation expense detail record.

If the due date of the transportation expense reimbursement comes, the transportation expense management system 10c executes a process for confirming the unpaid transportation expense reimbursement (step S12-3). More specifically, the transportation expense management system 10c retrieves the unpaid transportation expense reimbursement management record from the transportation expense reimbursement DB.

The transportation expense management system 10c then executes a transportation expense reimbursement alert process for alerting the officers/employees stored in the unpaid transportation expense reimbursement management record (step S12-4). More specifically, the transportation expense management system 10c sends a mail to an officer/employee who has unreimbursed transportation expense to alert that there is an unreimbursed transportation expense.

If the officer/employee selects the transportation expense reimbursement to-do item that is registered in the schedule management system 50, the transportation expense management system 10c activates a function to apply for the transportation expense reimbursement. The officer/employee applies for reimbursement for transportation expense using this function. More specifically, the officer/employee sets the travel route for the transportation expense reimbursement detail in the case of using a route other than the approved travel route. In this case, the transportation expense management system 10c automatically calculates the amount depending on the travel route. In regard to the transportation expense reimbursement detail of the approved travel route, a predetermined value is set as the travel route and the amount. Corrections can be made as required, but when a correction is made, the travel route is not the approved travel route.

Confirm and set all the transportation expense reimbursement details, and make application (step S12-5).

After applying for the transportation expense reimbursement, the transportation expense management system 10c notifies the event assistance system 20 of the to-do item application for the transportation expense reimbursement (step S9-6 in Fig. 16). Upon receipt of the notification, the event assistance system 20 sets the status of the transportation expense reimbursement to-do item of the traveled participant in the schedule management system 50 to Pending (step S8-11 in Fig. 16).

The transportation expense management system 10c then executes a transportation expense reimbursement approval process (step S12-6). More specifically, based on "Management Control: Travel (Transportation Expense Reimbursement)" in the control table CT4 of Fig. 13, the transportation expense management system 10c requires confirmation from an accounting staff member for the validity of the travel route in regard to the transportation expense reimbursement detail in the case of using a route other than the approved travel route. If the validity is confirmed by the accounting staff member, the transportation expense reimbursement is approved.

If the transportation expense reimbursement is approved, the transportation expense management system 10c notifies the event assistance system 20 of to-do item approval for the transportation expense reimbursement (step S9-7 in Fig. 16). Upon receipt of the notification, the event assistance system 20 sets the status of the transportation expense reimbursement to-do item of the traveled participant in the schedule management system 50 to Approved (step S8-12 in Fig. 16).

If the application of the transportation expense reimbursement has been approved, the transportation expense management system 10c executes the transportation expense reimbursement process (step S12-7). More specifically, the transportation expense management system 10c performs a payment processing for the approved transportation expenses to the officers/employees.

The present embodiment has the following advantages.
(1) In the above-described embodiment, upon detection of registration of the applied event, the control section 21 of the event assistance system 20 executes a process for merging the approval workflows (step S1-2). In this embodiment, the control section 21 executes a process for retrieving business operation control (step S6-1). Furthermore, the control section 21 executes a process for retrieving management control (step S6-2). This creates an associated control table for managing the individual controls depending on the event.
   Furthermore, the control section 21 executes a process for retrieving the individual controls. This process has been required to be done manually (step S7-1). The control section 21 executes the order relation setting process for the retrieved individual controls (step S7-2). As a result, even if two or more approvals are required for a single event, an appropriate approval process is performed while taking into consideration the preconditions.
   Also, the control section 21 executes a process for merging the individual controls in the same order (step S7-3). As a result, even if two or more approvals are required for a single event, the approval processes are integrally performed.
   The control section 21 also executes a process for expanding from a task to people based on the organization and the business operation (step S7-4). The control section 21 executes a process for optimizing the approval WF (step S7-5). Thus, even if two or more approvals are required for a single event, the approval processes are integrally performed.
(2) In the above-described embodiment, upon receipt of the event approval notification from the control section 21 of the event assistance system 20, the facility management system 10a executes a process for determining whether a facility/room entry setting is necessary for the people who have expressed their intention to attend the event (meeting)(step S10-1). If the people who have expressed their intention to attend do not have the authority to enter the facility/room of the location where the event (meeting) is held, the facility management system 10a executes a process for adding a facility/room entry setting (step S10-2). Thus, procedures for entry to the facility and entry to the room necessary for execution of the event are performed based on the approval of the event.
   Also, upon receipt of a notification of a change (expression of attendance) in the participants of the approved event from the control section 21, the facility management system 10a executes a process for determining whether the facility/room entry setting is necessary for the participant who has additionally expressed his or her intention to attend (step S10-1). Thus, procedures for entry to the facility and entry to the room are performed in accordance with the situation change.
   Also upon receipt of a notification of a change (expression of absence) in the participants of the approved event from the control section 21, if the person who has expressed to be absent is one of the visitors, the facility management system 10a executes a process for deleting the facility/room entry setting (step S10-3). Thus, a procedure is performed for a person concerned who no longer requires facility/room entry due to the situation change.
   If there is no change in the facility, the facility management system 10a executes a process for changing the setting for the visitor (step S10-4). Thus, procedures for entry to the facility and entry to the room are changed in accordance with the situation change.
   Furthermore, if entry of the visitor to the facility is detected by reading of the card reader, the facility management system 10a executes a visitor entry processing (step S10-5).
   In this case, the facility management system 10a notifies the event assistance system 20 of the entry of the participant to the facility. Thus, the event assistance system 20 grasps the participation state of the participants of the event.
   Also, if exit of a visitor is detected by reading of the card reader, the facility management system 10a executes a visitor exit processing (step S10-6). In this case, the facility management system 10a notifies the event assistance system 20 of the exit of the participant. Thus, the event assistance system 20 grasps the progress of the event.
(3) In the above-described embodiment, upon receipt of an approval notification of the event from the control section 21 of the event assistance system 20, the information management system 10b pushes the distribution materials that can be viewed in advance to the relevant smart terminals of the people who have expressed their intention to attend (step S11-1). As a result, materials used in the event are appropriately distributed.
   Upon receipt of a notification of a change (expression of attendance) in the participants of the approved event from the control section 21, the information management system 10b pushes the distribution materials that can be viewed in advance to the relevant smart terminal of a new participant who has expressed his or her intention to attend (step S11-1). Thus, even if the participants are changed, the materials are appropriately distributed.
   Furthermore, upon receipt of a notification of a change (distribution materials) in the approved event from the control section 21, the information management system 10b pushes an additional material of the distribution materials that can be viewed in advance to the relevant smart terminals of the people who have expressed their intention to attend (step S11-1). Thus, materials are appropriately distributed even if the materials are changed.
   Furthermore, upon receipt of a notification of a change (expression of absence) in the participants of the approved event from the control section 21, the information management system 10b deletes the material to be removed from the relevant smart terminal of the person who has expressed to be absent (step S11-2). Thus, the distributed materials can be removed if a person is unable to participate in the event.
   Also, upon cancellation of the approved event from the control section 21, the information management system 10b deletes the event materials from the relevant smart terminals of all the people who have expressed their intention to attend (step S11-2). Thus, the distributed materials can be removed even if the event is cancelled.
   Furthermore, if attendance of a participant to the approved event is detected, the access authority (R/W function) to the event materials is switched on (step S11-4). In this case, the associated smart terminal notifies the event assistance system 20 of the attendance of the participant. Thus, the event assistance system 20 grasps the attendance state of the event participants.
   Upon detection of the end of the approved event, the information management system 10b sends an event end notification to the event assistance system 20. Thus, the event assistance system 20 grasps the progress of the event.
(4) In the above-described embodiment, upon receipt of an end notification of the event from the control section 21 of the event assistance system 20, the transportation expense management system 10c executes a process for determining whether the attendee has traveled (step S12-1). Thus, the transportation expense management system 10c identifies the officers/employees who required transportation expenses and reimburses for the transportation expenses.

The above-described embodiment may be modified as follows.

In the above-described embodiment, the status notification section 211 broadcasts the status change to the service management systems 10. Instead, the status notification section 211 may have a status notification dictionary and perform a notification process based on the status notification dictionary. In this case, the status notification dictionary stores requirements for providing notification to each of the service management systems 10 corresponding to the detail of the status change of the approved event and the response corresponding to the requirements. The status notification dictionary can be included as rules or programs.

In the above-described embodiment, the status change of the status change section 212 is performed using the status change dictionary maintained by the status change section 212. Instead, the status change dictionary may be maintained by each service management system 10. The status change dictionary may be included as rules or programs.

In the above-described embodiment, the event assistance system 20 is connected to the party management system 22, the business operation storage 23, and the event storage 24, which serve as the organization information storage, via a network. The hardware configuration of the party management system 22, the business operation storage 23, and the event storage 24 is not limited to the configuration described above, but the party management system 22, the business operation storage 23, and the event storage 24 may be, for example, provided in the event assistance system 20.

In the above-described embodiment, the event assistance system 20 is connected to the schedule management system 50 via a network. Instead, the event assistance system 20 and the schedule management system 50 may be configured as one system. In this case, the schedule management record manages the status of the approved event.

In the above-described embodiment, the event storage 24 stores the event management record 240 associated with the applied event obtained from the schedule management system 50. The event management record 240 stores data on the event code and the status. Instead, the schedule management system 50 may manage the status. In this case, if the event assistance system 20 detects a change in the event status, the status is updated in the schedule management system 50.

In the above-described embodiment, the event storage 24 stores the event management record 240 associated with the applied event obtained from the schedule management system 50. The event management record 240 stores data on the event code and the status. The event management record 240 may store data on the event code, the event name, the applicant, the date and time, the location, the event category, the business operation, the materials, and the participants.

In the above-described embodiment, the status notification section 211 provides notification to the service management systems 10 in accordance with registration of or a change in the event determined by, for example, approvals. The notification process is performed using the dictionary maintained by the status notification section 211. The status notification section 211 may broadcast the notification to all the service management systems 10. In this case, each service management system 10 determines whether any response is necessary based on the notification obtained from the event assistance system 20. Thus, each service management system 10 is provided with information (for example, a dictionary that links "determination requirements for a notification that should be responded" and "details of process that should be carried out under the determination requirements") for responding in accordance with the notification obtained from the event assistance system 20. Each service management system 10 determines whether the notification obtained from the event assistance system 20 is associated with the service provided by the service management system 10 based on the detail of the notification. If the detail of the notification is associated with the service provided by the service management system 10, the service management system 10 executes a process corresponding to the notification.

In the above-described embodiment, each participant has an attribute of the participation form (AT1) besides the expression of attendance status (ST22). In regard to the entry control, if the participant needs to travel due to the work site of the participant, a new facility/room entry setting is required, and if the participant does not need to travel, a new facility/room entry setting is unnecessary. Instead, the facility/room entry setting may be performed on every officers/employees based on the facility/room that each officer/employee can enter. In this case, the party management system 22 stores the facilities and the rooms that each officer/employee can enter. If the location of the approved event is not registered as the facility/room that the officer/employee can enter, a new facility/room entry setting is performed.

In the above-described embodiment, the control section 21 executes the approval WF activation process (step S1-3). A participant management process for checking recommended participants of the applied event and the balance of the event participants may be performed. In this case, the recommended participants who are desired to participate are registered in the control table CT based on the event category. Furthermore, other recommended participants may be registered based on the event participants. The control section 21 performs a participant management process when the application of the event is submitted.

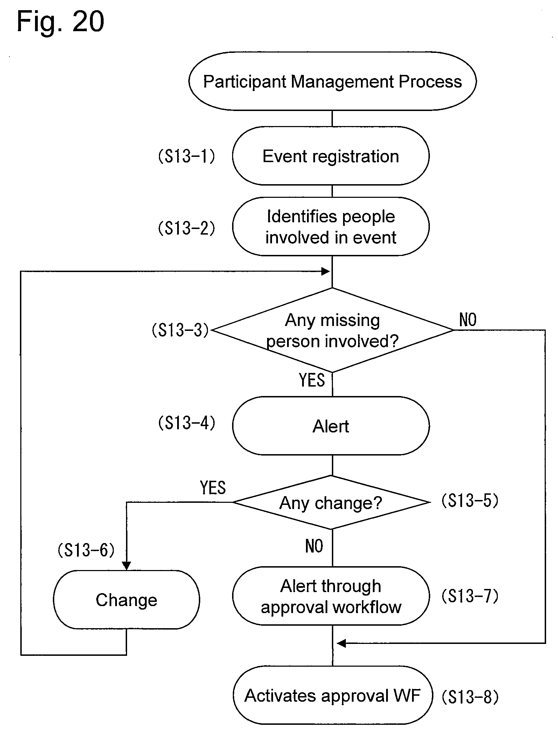

The participant management process will now be described with reference to Fig. 20.

First, the control section 21 executes the event registration process (step S13-1). More specifically, the control section 21 detects the event registration in the schedule management system 50.

Then, the control section 21 executes a process for identifying people involved in the event (step S13-2). More specifically, the associated control retrieval section 213 of the control section 21 identifies the participants stored in the participant data area of the registered event management record 240 as the person involved in the event.

The control section 21 then executes a process for determining whether there is any missing person involved in the event (step S13-3). More specifically, the associated control retrieval section 213 of the control section 21 identifies the recommended participants in the control table CT based on the event category and the target in the event management record 240. If the recommended participants are registered as the people involved in the event, the control section 21 determines that there is no missing person involved in the event. If any recommended participant not included in the people involved in the event is detected, the control section 21 determines that there is a missing person involved in the event.

If it is determined that there is a missing person involved in the event (YES in step S13-3), the control section 21 executes an alert process (step S13-4). More specifically, the associated control retrieval section 213 of the control section 21 outputs an alarm screen on the officer/employee terminal of the applicant. The alarm screen includes, together with an OK button, an input field for changing the participants.

The control section 21 then executes a process for determining whether there is any change (step S13-5). More specifically, the associated control retrieval section 213 of the control section 21 determines whether there is any change based on the input to the input field for changing the participants and addition of participants.

If there is an input to the input field for changing the participants, and it is determined that there is a change (YES in step S13-5), the control section 21 executes a changing process (step S13-6). More specifically, the associated control retrieval section 213 of the control section 21 changes the officer/employee code stored in the participant data area in the event management record 240 of the event storage 24. The control section 21 repeats the process of step S13-3 and the following processes.

If there is no input to the input field for changing the participants, and it is determined that there is no change (NO in step S13-5), the control section 21 executes an alert process in the approval workflow (step S13-7). More specifically, the associated control retrieval section 213 of the control section 21 includes a message indicating that there is no problem in the approval workflow.

The control section 21 executes the approval WF activation process in the same manner as step S1-2 (step S13-8). If it is determined that there is no missing person involved in the event (NO in step S13-3), the control section 21 executes the approval WF activation process (step S13-8).

In the above-described embodiment, upon detection of an expression of participation (expression of attendance or expression of absence) from a participant, the control section 21 executes a participant change notification process (step S8-3, S8-4). Substitute participation may be permitted. In this case, the event assistance system 20 sends a notification of a participant change including information on the substitute participant to the service management systems 10. In this case, each service management system 10 responds to the substitute participant based on the authority of the original participant.

In the above-described embodiment, the information management system 10b determines the end of the approved event in accordance with the usage state of the information by the event participants. The end of the approved event is determined based on not only the usage state of the information. For example, if the end cannot be detected, the information management system 10b may determine the end of the approved event based on the time of day during which the approved event is set. In this case, if a predetermined time has elapsed from the event date and time, it is determined that the event has ended.

In the above-described embodiment, upon detection of the registration of the applied event, the control section 21 executes a process for merging the approval workflows (step S1-2). Instead, if the individual control of the applied event has been approved in advance, the approval workflow of the individual control may be omitted. In this case, the event assistance system 20 includes an approved information storage, which stores information that has been approved in advance related to the event category, the date and time, the location, and the target. Upon detection of registration of the applied event, the control section 21 confirms whether there is a prior approval in the approved information storage based on the event detail. If the prior approval has already been registered, the approval workflow of the individual control is omitted as being approved. Thus, approval of the event detail is efficiently performed with the prior approval.

In the above-described embodiment, the control section 21 generates the associated control table by executing the process for retrieving the business operation control (step S6-1) and the process for retrieving the management control (step S6-2). The approval workflow is generated based on the associated control table. In this case, the approval workflow may be generated in accordance with the attribute of the applied event. For example, a necessary approval workflow is determined in accordance with the applicant, the date and time, and the location of the applied event and the attributes of the participants.

In the above-described embodiment, the control section 21 sends various notifications on the approval result and the approved event to all the service management systems 10. Instead, the service management system 10 to which the notification is sent may be selected in accordance with the attribute of the approved event. In this case, the event assistance system 20 includes a notification destination information storage, which designates the service management system 10 to which the notification is sent in accordance with the individual control.

In the above-described embodiment, the transportation expense management system 10c executes the process for generating the travel information (step S12-2), the process for confirming the unpaid transportation expense reimbursement (step S12-3), and the transportation expense reimbursement alert process (step S12-4) for every traveled participant. The transportation expense management system 10c may immediately execute the application process for the transportation expense reimbursement to the approval process.

The above-described embodiment uses the procedure DB when creating the approval workflow in the WF coordination section 21 B. The procedure DB may be used in identifying the service management systems 10 to be coordinated and in logical checking of the process in the coordinated workflow. For example, in the control table CT4 in Fig. 13, "Management Control: Travel (Transportation Expense Reimbursement)" has the execution result as the control phase. In the "coverage" of the execution result, it is defined that a participant is a visitor at the end of the event ("execution result"). This leads to the steps of the transportation expense reimbursement system (steps S12-1, S12-2). Similarly, "validity" and "correctness" leads to step S12-6. Furthermore, "time limit" leads to step S12-3.

In the above-described embodiment, the facility management system 10a generates a two-dimensional code for an outsider and sends the two-dimensional code to the portable terminal of the outsider. If the outsider visits the facility, the two-dimensional code that is sent to the outsider is read by the two-dimensional code reader at the facility reception to identify the event and the visitor. Subsequently, an external visitor ID card that is lent to the visitor is read by the card reader, and the external visitor ID card is associated with the facility/room entry setting record information of the facility/room entry setting DB. Instead of the two-dimensional code or the ID card, a near field communication (NFC) technology can be used. In this case, a NFC-equipped device is used as an ID card. Also, if the identification code of the NFC-equipped device of the external visitor is grasped in advance, the identification code can be used to perform the facility/room entry setting.

In the above-described embodiment, the facility management system 10a executes a process for adding the facility/room entry setting (step S10-2). If a participant is participating in two or more events, the facility/room entry settings may be registered at the same time. For example, in a case of an officer/employee in the company, the time period from the earliest time to the latest time of the events is registered in the facility/room entry setting DB. Furthermore, in the case of an outsider, data is collected in one external visitor ID card. In this case, the facility/room entry setting record associated with the external visitor ID card for each event is registered in the facility/room entry setting DB.

In the above-described embodiment, if there is any material to be removed, the information management system 10b deletes the event material from the relevant smart terminals of the people who have expressed their intention to participate (step S11-2). The event material may be removed if no one is referring to the event material (garbage collection method). Thus, the present embodiment can also cope with a case in which the same file is used among two or more events.

In the above-described embodiment, the WF coordination section 21 B of the control section 21 detects the event application registered in the schedule management system 50 (F11). The coordination between the schedule management system 50 and the WF system 55 performed by the WF coordination section 21 B may be carried out during execution of the approval workflow in addition to the time of registration (application).

Furthermore, the applied event may be registered in the WF system 55 instead of the schedule management system 50. That is, if the WF coordination section 21 B detects the applied event registered in the WF system 55, the information is registered in the event storage 24. Furthermore, the WF coordination section 21 B delivers the registration information of the event to the schedule management system 50. Thereafter, the WF system 55 merges and executes the approval workflows depending on the details of the applied event as described above.

In the above-described embodiment, the WF system 55 performs a process for routing various applications to the officer/employee terminals of the authorized people associated with the approval based on the approval workflow. During execution of the approval workflow, the authorized person who subsequently performs control such as confirmation may be notified using the to-do list of the schedule management system 50. In this case, the WF coordination section 21 B (approval WF executing section 215) sends a notification to the to-do list of the authorized people who should subsequently perform control such as confirmation based on the approval workflow. The to-do list includes settings of the link to the confirmation screen of the WF system 55. The confirmation process can be performed on the confirmation screen of the WF system 55. Furthermore, the confirmation may be performed directly on the to-do list screen without linking to the confirmation screen of the WF system 55 from the to-do list.

In the above-described embodiment, the schedule management system 50 manages the events that the officers/employees have applied (applied events) and the to-do list of each officer/employee. The service coordination section 21 A of the control section 21 may sequentially notify the schedule management system 50 of the status change in the event. Furthermore, the WF coordination section 21 B of the control section 21 may sequentially notify the schedule management system 50 of the confirmation state of the approval workflow. In this case, the schedule management system 50 registers the status of the event. Thus, the status of the event is confirmed by using the scheduler of the schedule management system 50.

## Claims

1. An event assistance apparatus comprising a control section connected to a schedule management system, which stores event schedule information, and a plurality of service management systems, wherein
each service management system executes a type of process corresponding to an event to be managed,
the control section is configured to
identify an event to be managed based on an event in the schedule information stored in the schedule management system, and
provide notification based on the event to be managed to each service management system to execute a type of process corresponding to the event to be managed.

2. The event assistance apparatus according to claim 1, wherein, upon detection of a change in the status of the event to be managed, the control section is configured to notify each service management system of the change in the event to be managed.

3. The event assistance apparatus according to claim 1 or 2, wherein the control section is configured to
obtain situation information change related to the event to be managed from each service management system, and
determine the status of the event to be managed based on the situation change information.

4. The event assistance apparatus according to any one of claims 1 to 3, wherein the control section is configured to
identify an event attribute of the event to be managed, and
determine whether a notification to each service management system is necessary based on the event attribute.

5. An event assistance apparatus, comprising a control section connected to a schedule management system, which stores event schedule information, and a plurality of service management systems, wherein
each service management system executes a type of process corresponding to an event to be managed,
the control section further includes an administrative control section, which determines an approved route in accordance with an event attribute, and
the control section is configured to obtain the approved route from the administrative control section based on the event attribute of the event to be managed additionally registered in the schedule information.

6. The event assistance apparatus according to claim 5, wherein
the administrative control section further includes a control storage, which stores individual control on a control event that needs to be controlled,
the control section is configured to
identify the control event that needs to be controlled based on the event attribute, and determine the approved route corresponding to the individual control of the control event in the administrative control section.

7. The event assistance apparatus according to claim 6, further comprising an authorized person determining section for determining an authorized person for approval, and
the control section is further configured to determine, in the authorized person determining section, an authorized person for approval corresponding to the event attribute.

8. The event assistance apparatus according to claim 7, wherein the control section is further configured to determine an authorized person for approval based on an attribute of a participant of the event to be managed.

9. The event assistance apparatus according to any one of claims 6 to 8, wherein the control storage stores information on an order relation of individual controls,
the control section is configured to
determine the order relation of the individual controls, which are identified based on the event attribute, and
determine an approval route based on the order relation.

10. The event assistance apparatus according to any one of claims 7 to 9, wherein the authorized person determining section maintains approval rules for determining an authorized person for approval, and
when the control section detects that the authorized person for approval is common among the individual controls identified based on the event attribute, the control section is further configured to integrate, in the approval route, the individual controls having the common authorized person for approval to satisfy the approval rules.

11. The event assistance apparatus according to any one of claims 6 to 10,
wherein the control storage stores individual controls for which the authorized person is responsible in regard to the authorized person for approval in the approval route.

12. The event assistance apparatus according to any one of claims 6 to 11,
wherein the control section is further configured to
confirm whether there is a prior approval for the event to be managed, and
respond to the individual control as an approved control if the prior approval is already registered.

13. The event assistance apparatus according to any one of claims 5 to 12,
wherein the control section is further configured to request an approval from an authorized person for approval in the approval route and manage the approval state of the authorized person.

14. The event assistance apparatus according to any one of claims 5 to 12,
wherein
the control section is further connected to a workflow management system, and
the control section is further configured to share the approval route and the approval state with the workflow management system.

15. The event assistance apparatus according to any one of claims 1 to 14,
wherein
the control section is configured to
determine a recommended participant for the event to be managed, and
output an alert when the recommended participant is not registered in the event to be managed.

16. A method for assisting an event using an event assistance apparatus, wherein the event assistance apparatus includes a control section connected to a schedule management system, which stores event schedule information, and a plurality of service management systems,
each service management system executes a type of process corresponding to an event to be managed,
the control section
identifies an event to be managed based on an event in the schedule information stored in the schedule management system, and
provides notification based on the event to be managed to each service management system to execute a type of process corresponding to the event to be managed.
